# EUROPÄISCHE PATENTSCHRIFT

(11) **EP 0 754 885 B1**
(45) Veröffentlichungstag und Bekanntmachung des Hinweises auf die Patenterteilung: **01.09.1999**
(21) Anmeldenummer: 96117317.6
(22) Anmeldetag: 19.11.1994
(51) Int. Cl.: F16H 59/02, G05G 5/20

(54) **Getriebeschalthebelanordnung**
Control lever assembly
Agencement de levier de commande

(30) Priorität: 01.12.1993 US 160545
(43) Veröffentlichungstag der Anmeldung: 22.01.1997
(62) Teilanmeldung aus: 94118262.8
(73) Patentinhaber: Deere & Company, Moline, Illinois 61265-8098 (US)
(72) Erfinder: Easton, David Joseph, Cedar Falls, Iowa 50613 (US); Uehle, Howard Thomas, Cedar Falls, Iowa 50613 (US)
(74) Vertreter: Feldmann, Bernhard

(56) Entgegenhaltungen:
- EP-A- 0 075 693
- FR-A- 2 143 094
- FR-A- 2 437 315
- US-A- 4 830 156
- US-A- 5 184 523
- US-A- 5 243 871

## Beschreibung

Die Erfindung betrifft eine Getriebeschalthebelanordnung, insbesondere eine Steuerhebelanordnung für eine Lastschaltgetriebesteuerung, die durch stoßweises oder Impulsschalten betätigt wird, gemäß dem Oberbegriff des Patentanspruchs 1.

Die US-A-4,519,266 zeigt eine derartige Getriebeschalthebelanordnung, bei der die Stellung des Schalthebels mittels magnetempfindlicher Sensoren und mittels am Schalthebel befestigter Magnete kontakt- und berührungslos abtastbar ist. Die Schaltgasse des Hebels ist als Doppel-H ausgebildet und enthält keine Parkposition. Für die Bereitstellung einer Parkposition wäre eine zweite Einrichtung erforderlich.

Elektronisch gesteuerte Lastschaltgetriebe erfordern eine durch die Bedienungsperson betätigbare Steuereinrichtung, mit beispielsweise einem oder zwei Schalthebeln, durch die Steuersignale erzeugt werden, welche das Getriebe steuern. Die US-A-4,425,620 und die US-A-4,855,913 zeigen beispielsweise Getriebe, die durch zwei Hebel betätigt werden: einen Mode-Wahlhebel zur Auswahl zwischen Vorwärts, Neutral und Rückwärts und ein Impuls- oder Hochschalt/Runterschalt-Hebel. Ferner ist ein Lastschaltgetriebe mit zwei Hebeln bekannt, das bei der Planierraupenserie 700 der Fa. Champion Road Machinery verwendet wird.

Es wurden bisher verschiedene Konstruktionen vorgeschlagen, bei denen durch einen einzigen Hebel sowohl die Modeauswahl-Funktion als auch die Hochschalt/Runterschalt-Funktion ausgeführt werden. Beispielsweise wird bei der Traktorserie 8030 der Fa. Ford New Holland eine Schaltungssteuerung mit nur einem Schalthebel verwendet. Bei dieser Hebelkonstruktion ist der Schalthebel in Längsrichtung in eine Vorwärts-, eine Neutral- und in eine Rückwärtsposition und in Querrichtung von jeder dieser Positionen in Hoch- und Runterschalt-Unterpositionen verschiebbar. Die Konstruktion bietet jedoch keine Parkposition. Diese wird durch eine separate Einrichtung realisiert. Ferner erfordert diese Konstruktion, daß ein auf dem Schalthebel befestigter Sperring angehoben wird, um den Schalthebel aus seiner Neutralstellung nach vorn oder hinten zu bewegen.

Die US-A-4,442,730 zeigt ein Getriebe, das durch einen Hebel gesteuert wird, welcher zwischen einer Vorwärts-, Neutral- und Rückwärtsposition bewegbar und aus seiner Vorwärts- und Rückwärtsposition quer in Hoch- und Runterschaltpositionen verstellbar ist. Die US-A-4,991,454 zeigt ein Schema für einen Getriebeschaltsteuerhebel, welches eine Vorwärts-, Neutral- und Rückwärtsposition enthält. Der Hebel ist aus jeder dieser Positionen in Hoch- und Runterschalt-Unterpositionen bewegbar. Die US-A-4,926,172 und die US-A-5,243,871 zeigen Hebelmechanismen mit einer Führung, durch die ein Schaltmuster ähnlich dem in der US-A-4,991,454 beschriebenen gebildet wird. Bei diesen Einhebelkonstruktionen erfordert die Hoch- und Runterschaltfunktion eine Hebelbewegung in Richtungen, die quer zu der Bewegungsrichtung für die Mode-Auswahlfunktion liegen.

Eine weitere Einhebelschaltsteuerung ist durch die Traktorserie 6100 der Fa. Agco White bekannt. Bei dieser Einhebelkonstruktion gibt es einen einzigen linearen in Längsrichtung ausgerichteten Schlitz mit Vorwärts-Hochschalt-, -Nichtschalt- und -Runterschalt-Positionen in einem vorderen Schlitzbereich und Rückwärts-Hochschalt-, -Nichtschalt- und -Runterschalt-Positionen in einem hinteren Schlitzbereich. Diese Konstruktion enthält jedoch keine Parkposition. Diese wird durch einen separaten Hebel bereitgestellt. Die Konstruktion erfordert ferner, daß ein separater, auf dem oberen Ende des Hebels angeordneter Druckknopf herunter gedrückt wird, um den Hebel aus seiner Neutralposition herauszubewegen. Die Bedienung einer derartigen Hebelschaltsteuerung ist schwierig, und es gibt keine Führungs-Hebelbahn, durch die die angewendete Schaltfunktion sicher angezeigt wird.

Es ist wünschenswert, eine Schaltsteuerung vom Einhebeltyp zur Verfügung zu haben, die sowohl die Auswahlfunktion für den Vorwärts-, Neutral- und Rückwärts-Modus als auch die Hochschalt/Runterschalt-Funktion in Abhängigkeit von natürlichen oder intuitiven Hebelbewegungen ermöglicht, eine Parkposition einschließt und keinen Druckknopf oder Sperring erfordert.

Die der Erfindung zugrunde liegende Aufgabe wird darin gesehen, eine Getriebeschalt-Steuerhebelanordnung bereitzustellen, die es erlaubt, die Mode-Auswahlfunktion und die Hochschalt-/Runterschalt-Funktion durch eine natürliche oder intuitive Bewegung eines Hebels auszuführen. Dabei soll sowohl die Mode-Auswahlfunktion als auch die Hochschalt/Runterschalt-Funktion durch eine Bewegung in Längsrichtung ermöglicht werden. Die Steuerhebelanordnung soll eine Parkposition einschließen und weder einen Druckknopf noch einen Sperring erfordern.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Eine bevorzugte Ausbildung der Steuerhebelanordnung enthält einen Hebel, der an einem Gehäuse in Längs- und Querrichtung schwenkbar befestigt ist. Eine Hebelführung nimmt den Hebel auf und führt diese in einen Führungsschlitz. Der Führungsschlitz enthält einen in Längsrichtung verlaufenden Hauptschlitz sowie einen ersten, zweiten und dritten Unterschlitz, die ebenfalls in Längsrichtung ausgerichtet, von dem Hauptschlitz in Querrichtung getrennt und in einer Reihe auf einer Seite des Hauptschlitzes angeordnet sind. Jeder der Unterschlitze ist durch einen quer ausgerichteten Querschlitz mit dem Hauptschlitz verbunden. Die Unterschlitze dienen als Vorwärtsschlitz, Rückwärtsschlitz und Parkschlitz. Auf dem Hebel ist ein erster Magnet befestigt. Ein zweiter Magnet ist auf einem Sektorteil befestigt. Auf dem Gehäuse sind Halleffektsensoren angeordnet. Das Sektorteil, die Magneten und die Halleffektsensoren wirken derart zusammen, daß Signale, die der Lage des Hebels innerhalb des Führungsschlitzes entsprechen, erzeugt werden. Durch eine Hebelrückstellfeder wird der Hebel in eine rückwärtige Position des Hauptschlitzes gedrängt. Eine Querrückstellfeder drängt den Hebel in Richtung Sektorteil. Eine Zentrierfeder drängt das Sektorteil in eine hinsichtlich des Gehäuses mittlere Position. Rastmittel halten den Hebel lösbar innerhalb eines Unterschlitzes.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine seitliche Zusammenbauansicht der erfindungsgemäßen Steuerhebelanordnung,
- Fig. 2: eine Zusammenbauansicht der erfindungsgemäßen Steuerhebelanordnung von oben,
- Fig. 3A und 3B: zwei zusammengehörige Explosionsdarstellungen einer erfindungsgemäßen Steuerhebelanordnung und
- Fig. 4A und 4B: zwei zusammengehörige Explosionsdarstellungen einer erfindungsgemäßen Steuerhebelanordnung aus einer anderen Perspektive.

Die Steuerhebelanordnung 10 des Ausführungsbeispiels enthält ein Gehäuse 12, welches eine plattenförmige Basiswandung 14 und eine umlaufende Randwandung 16 enthält. Die Basiswandung 14 weist in der Nähe ihres unteren Endes eine Bohrung 18 und eine radial zu der Bohrung 18 beabstandete bogenförmige Öffnung 20 auf. Radial unter der Öffnung 20 befindet sich ein bogenförmiger Zentrierfederschlitz 21. Die Steuerhebelanordnung 10 ist für die Verwendung bei elektronisch gesteuerten Lastschaltgetrieben, wie sie von verschiedenen Herstellern angeboten werden, vorgesehen.

Eine Führungsplatte 22 ist an einem oberen Ende des Gehäuses 12 befestigt. In die Führungsplatte 22 ist ein Führungsschlitz 24 eingelassen. Der Führungsschlitz 24 enthält einen relativ langen, sich in Längsrichtung erstreckenden Hauptschlitzbereich 26. Der Führungsschlitz 24 enthält ferner einen sich in Längsrichtung erstreckenden Vorwärts schlitz 28 für das Hoch- und Runterschalten bei Vorwärtsfahrt, einen sich in Längsrichtung erstreckenden Rückwärtsschlitz 30 für das Hoch- und Runterschalten bei Rückwärtsfahrt und einen sich in Längsrichtung erstrekkenden Parkschlitz 32. Die Schlitze 28, 30 und 32 sind kürzer als der Hauptschlitz 26 und sind zu diesem in Querrichtung beabstandet. Die Schlitze 28 und 30 stehen mit dem Hauptschlitz 26 durch entsprechende querverlaufende Verbindungsschlitze 34 bzw. 36 in Verbindung. Der Parkschlitz 32 ist mit dem Hauptschlitz 26 durch einen sich quer erstreckenden Neutralschlitz 38 verbunden.

Auf einer Seite des Gehäuses 12 ist eine Schalteraufnahme 31 ausgebildet. In diese Schalteraufnahme 31 ist ein im Handel erhältlicher Springschalter 33 einsetzbar. Der einrastbare Schalter 33 wird vorzugsweise als Neutralstartschalter verwendet, wie er in der US-A-5,251,733 beschrieben ist, auf die hiermit zwecks Offenbarung verwiesen wird.

Ein Schwenkteil 40 enthält eine Welle 42, die drehbar von der Bohrung 18 aufgenommen wird, und einen Arm 44, der radial von einem Ende der Welle 42 absteht. Der Arm 44 wird durch zwei im wesentlichen parallele Seiten 46 und 48 gebildet, zwischen denen ein Schlitz 50 ausgebildet ist. Der Endbereich 52 des Arms 44 ist parallel zu der Achse der Welle 42 und in Richtung der Platte 14 ausgerichtet. In dem Endbereich 52 ist ein Schlitz 53 ausgebildet. Eine Schwenkbohrung 54 erstreckt sich durch die Seiten 46 und 48 in der Nähe der Welle 42. Eine Erhebung 56 ragt von einer Seite 46 vor und dient dem Eingriff mit dem Neutralstartschalter 33.

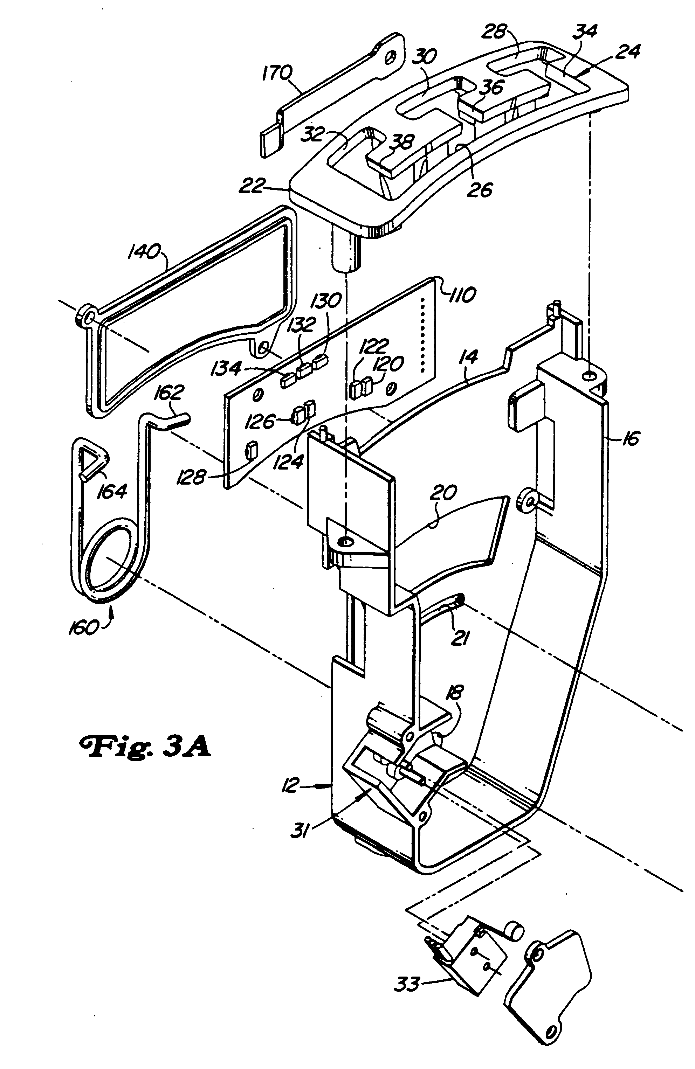

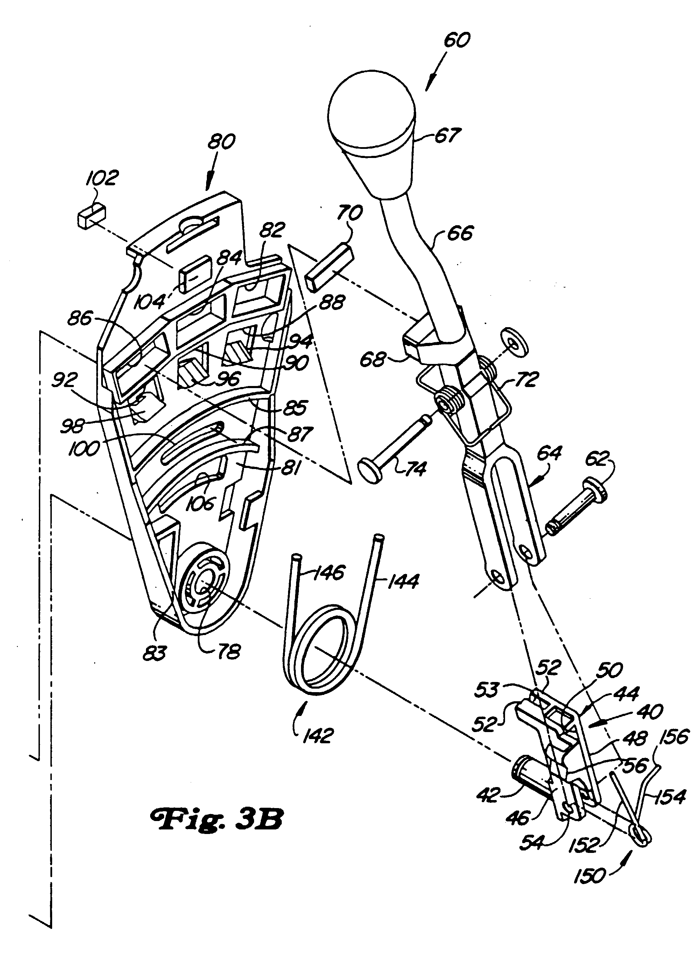

Ein Hebel 60 ist durch einen Schwenkstift 62, der sich durch einen gabelförmigen Bereich 64 des Hebels 60 und durch die Schwenkbohrung 54 erstreckt, schwenkbar mit dem Arm 44 verbunden. Der Hebel 60 enthält einen Schaft 66, der innerhalb des Führungsschlitzes 24 bewegbar ist und der sich von dem gabelförmigen Bereich 64 bis zu einer Handhabe 67, die durch eine Bedienungsperson ergriffen werden kann, erstreckt. Der Schaft 66 trägt einen Magnetträger 68, der von einem mittleren Bereich des Schaftes 66 in Richtung der Gehäusewandung 14 vorsteht. Wie am besten aus Fig. 3B hervorgeht, ist ein Permanentmagnet 70 im Magnetträger 68 befestigt. Durch die beschriebene Ausbildung läßt sich der Hebel 60 in Längsrichtung um die Achse der Welle 42 und in Querrichtung um die Achse des Schwenkstiftes 62 verschwenken. Zwischen dem gabelförmigen Bereich 64 und dem Magnetträger 68 ist an dem Schaft 66 mittels eines Stiftes 74 eine Rastfeder 72 befestigt, die zwei Schenkel enthält, welche sich zwischen zwei von dem Stift 74 gehaltenen Schraubenfederabschnitten erstrecken.

Zwischen dem Hebel 60 und der Wandung 14 ist ein Sektorteil 80 angeordnet. Das Sektorteil 80 weist einen im wesentlichen fächerförmigen Körper 81 auf, der teilweise durch eine vorstehende Randwandung 83 umgeben ist. Zwei bogenförmige Verstärkungsrippen 85 und 87 erstrecken sich über den Körper 81 von einer zur anderen Seite der Randwandung 83. Durch das untere Ende des Sektorteils 80 erstreckt sich eine Bohrung 78, die die Welle 42 drehbar aufnimmt. Das Sektorteil 80 weist eine erste zum Hebel 60 weisende Seite und eine zweite zur Wandung 14 weisende Seite auf. Das Sektorteil 80 hat eine erste, zweite und dritte Sensoröffnung 82, 84 und 86, die radial zu der Wellenbohrung 78 beabstandet und in einer bogenförmigen Reihe angeordnet sind, welche in der Achse der Bohrung 78 zentriert ist.

Zu jeder Sensoröffnung 82, 84, 86 ist weiter radial innen eine entsprechende Rastöffnung 88, 90 bzw. 92 vorgesehen. Von der unteren Kante jeder Rastöffnung 88, 90, 92 steht beidseits ein Rastteil 94, 96 bzw. 98 vor. Jedes der Rastteile 94, 96 und 98 wird durch zwei Rampenflächen gebildet, welche von einem linear und quer zu der Achse der Welle 42 ausgerichteten Scheitel aus schräg nach unten geneigt sind. Die Rastfeder 72 kann lösbar mit den Rastteilen 94, 96 und 98 in Eingriff gebracht werden, um den Hebel 60 lösbar innerhalb eines der Schlitze 28, 30 oder 32 festzuhalten.

Ein bogenförmiger Zentrierfederschlitz 100 befindet sich in radialer Hinsicht weiter innen als die Rastöffnungen 88, 90, 92. Ein zweiter Permanentmagnet 102 wird in einer Ausnehmung 104 gehalten, welche radial über der mittleren Sensoröffnung 84 auf der Seite des Sektorteils 80 liegt, die der Wandung 14 zugewandt ist. Radial innerhalb der Verstärkungsrippe 87 befindet sich ein bogenförmiger Schlitz 106, der der Aufnahme des Endbereiches 52 des Schwenkteils 40 dient, in dem der Schlitz 53 ausgebildet ist.

Eine Schaltkarte 110 ist auf der gegenüber dem Sektorteil 80 liegenden Seite der Wandung 14 radial weiter außen als die Öffnung 20 und im wesentlichen in Deckung mit den Sensoröffnungen 82 - 86 und mit dem Magnet 102 befestigt. Auf der Seite der Schaltkarte 110, die dem Sektorteil 80 zugewandt ist, sind Hallsensoren oder Schalter befestigt. Die Sensoren 120 und 122 sind in Deckung mit der Öffnung 82 befestigt und werden vorzugsweise als Vorwärts- bzw. als "Nicht-Neutral"-Schalter verwendet. Die Sensoren 124 und 126 sind in Deckung mit der Öffnung 84 befestigt und werden vorzugsweise als "Nicht-Neutral"- bzw. Rückwärtsschalter verwendet. Der Sensor 128 ist in Deckung mit der Öffnung 86 befestigt und wird vorzugsweise als Parkschalter verwendet. Die Sensoren 130, 132 und 134 sind in Deckung mit dem zweiten Magneten 102 befestigt und werden vorzugsweise als Schaltimpuls-, "Nichtschalt"- bzw. Schaltimpuls-Schalter verwendet. Die Schaltkarte 110 wird durch eine Abdeckung 140 geschützt, die mit der Wandung 14 verschraubbar ist.

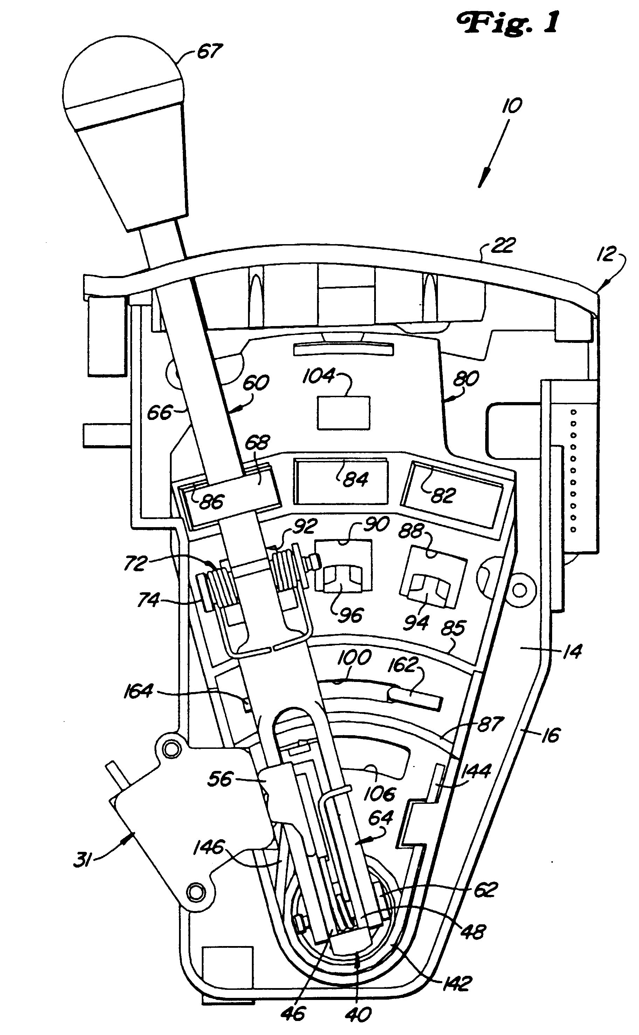

Eine Hebelrückstellfeder 142 enthält einen konzentrisch zur Welle 42 ausgerichteten Schraubenfederabschnitt, einen Schenkel 144, welcher mit der Randwandung 83 des Sektorteils 80 in Eingriff steht, und einen Schenkel 146, welcher von dem Schlitz 52 des Schwenkteils 40 aufgenommen wird. Die Feder 142 ist vorgespannt und drückt den Hebel 60 bezüglich des Sektorteils 80 gegen den Uhrzeigerdrehsinn (Fig. 1).

Eine Querrückstellfeder 150 enthält einen zwischen den Seiten 46 und 48 des Schwenkteils 40 liegenden, konzentrisch zum Schwenkstift 62 ausgerichteten Schraubenfederabschnitt, einen Schenkel 152, welcher mit einem Teil des Schwenkteils 40 in Eingriff steht, und einen Schenkel 154 mit einem abgebogenen Ende 156, welches mit dem gabelförmigen Ende 64 des Hebels 60 in Eingriff steht. Die Feder 150 ist vorgespannt und drückt den Hebel 60 in Richtung des Sektorteils 80.

Eine Zentrierfeder 160 enthält einen konzentrisch zur Welle 42 ausgerichteten Schraubenfederabschnitt und Schenkel 162 und 164, die sich durch den Schlitz 21 der Wandung 14 des Gehäuses 12 und den Schlitz 100 des Sektorteils 80 erstrecken. Die Zentrierfeder 160 ist vorgespannt, so daß die Schenkel 162 und 164 aufgespreizt oder voneinander weg bewegt werden. Damit wirkt die in die Schlitze 21 und 100 eingesetzte Feder 160 derart, daß das Sektorteil 80 hinsichtlich des Gehäuses 12 in eine mittlere Lage gedrängt wird. Die Federn 142 und 160 wirken damit zusammen, um den Hebel 60 in eine Lage zu drängen, in der der Magnetträger 68 in Deckung mit der Öffnung 86 des Sektorteils 80 liegt, so daß die Erhebung 56 normalerweise in Eingriff mit dem Neutralstartschalter 33 steht.

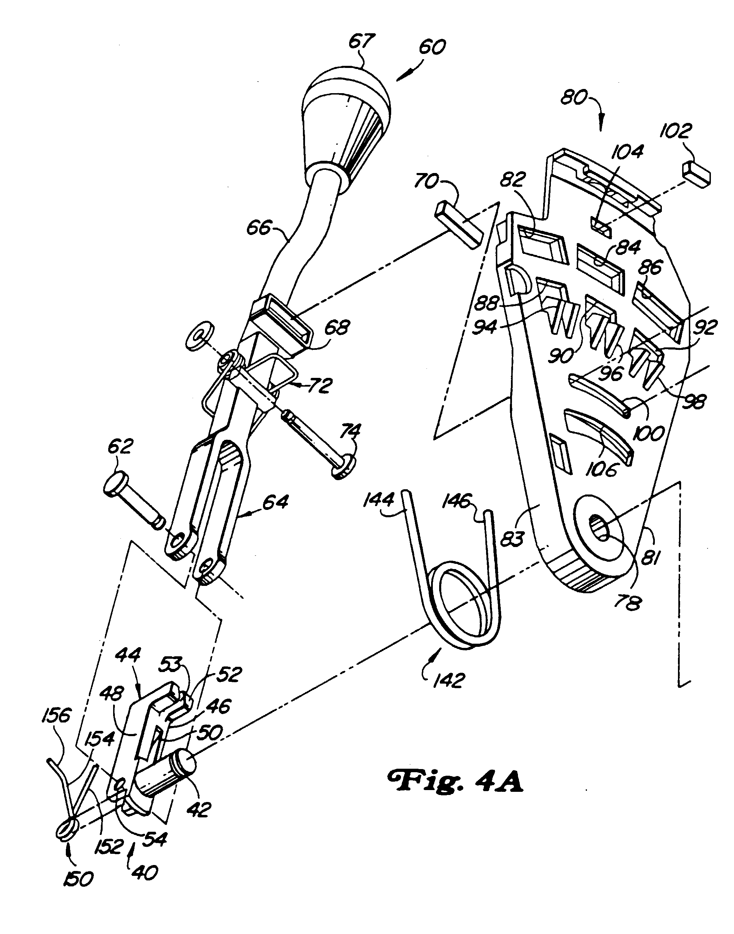

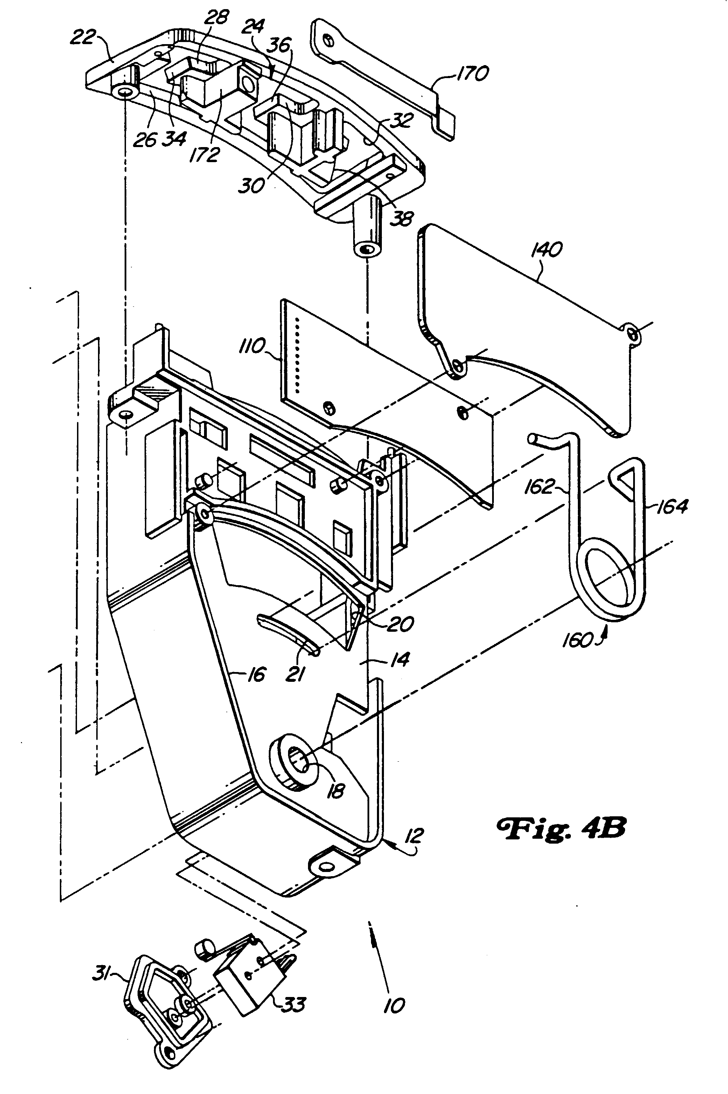

Wie am besten aus Fig. 4B ersichtlich, ist eine Parkeingriffsfeder 170 beispielsweise durch nicht gezeigte Kopf schrauben an einem aufgesetzten Bereich 172, der auf der Unterseite der Führungsplatte 22 angeformt ist, befestigt.

### Betriebsweise

Der nicht durch die Bedienungsperson betätigte Hebel 60 wird normalerweise durch die Federn 142 und 150 in eine Neutralstellung gedrückt, in der sich der Schaft 66 in dem Neutralschlitz 38 zwischen dem Hauptschlitz 26 und dem Parkschlitz 32 befindet. In dieser Position wird der Neutralstartschalter 33 durch die Erhebung 56 betätigt.

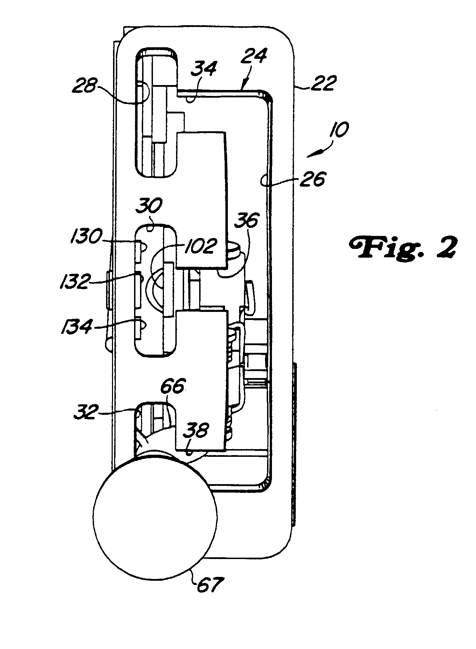

Der Hebel 60 kann nach links in die Position verschoben werden, die in Fig. 2 dargestellt ist. Hierbei wird der Schaft 66 in den Parkschlitz 32 und der Magnetträger 68 in die Öffnung 86 des Sektorteils 80 bewegt, der Magnet 70 betätigt den Halleffekt-Parkschalter 128, und die Rastfeder 72 wirkt mit dem Rastteil 98 zusammen, um den Hebel 60 lösbar in dieser Position zu halten.

Aus dieser Position kann der Hebel 60 nach vorn (oder bezüglich Fig. 2 nach oben) verschoben werden, wobei das Sektorteil 80 sich mit dem Schaft 66 bewegt und der Magnet 102 den Halleffektschalter 130 betätigt. In dieser Lage wirkt die Feder 170 mit dem Schaft 66 zusammen und hält den Hebel 60 lösbar in dieser Position fest. Die Betätigung des Schalters 128, auf die eine Betätigung des Schalters 130 folgt, kann ausgenutzt werden, um eine nicht gezeigte mikroprozessor-unterstützte elektronische Steuereinheit zu veranlassen, ein nicht gezeigtes Lastschaltgetriebe in seinen Parkzustand zu überführen.

Aus der zuerst beschriebenen Position kann der Hebel 60 nach rechts, dann nach vorn und schließlich nach links (oder bezüglich Fig. 2 nach rechts, nach oben und nach links) über den Querschlitz 36 in den Rückwärtsschlitz 30 bewegt werden. In diesem Fall bewegt sich der Magnetträger 68 in die Öffnung 84 des Sektorteils 80, der Magnet 70 betätigt den Halleffekt-Rückwärtsschalter 124 und den Halleffekt-"Nicht-Neutral"-Schalter 126, und die Rastfeder 72 wirkt mit dem Rastteil 96 zusammen, um den Hebel 60 lösbar in dem Rückwärtsschlitz 30 zu halten. Wird der Hebel 60 dann nach hinten bewegt, so bewegt sich das Sektorteil 80 mit dem Schaft 66 ebenfalls nach hinten, und der Magnet 102 betätigt den Halleffekt-"Runterschaltimpuls"-Schalter 134 und deaktiviert den Schalter 132. Wenn der Hebel 60 nach vorn bewegt wird, so bewegt sich das Sektorteil 80 mit dem Schaft 66 nach vorn, und der Magnet 102 betätigt den Halleffekt-"Hochschaltimpuls"-Schalter 130 und deaktiviert den Schalter 132. Wird der Hebel 60 losgelassen, so drückt die Feder 160 das Sektorteil 80 und den Hebel 60 bezüglich des Rückwärtsschlitzes 30 in eine mittlere Lage, in der nur der Schalter 132 betätigt wird. Die Betätigung der Schalter 130, 132 und 134 kann ausgenutzt werden, um eine nicht gezeigte mikroprozessor-unterstützte elektronische Steuereinheit zu veranlassen, ein nicht gezeigtes Lastschaltgetriebe im Bereich seiner Rückwärtsgangübersetzungen, die durch die Betätigung der Schalter 124 und 126 freigegeben sind, schrittweise hoch oder runter zu schalten.

Aus der zuerst beschriebenen Position kann der Hebel 60 nach rechts, dann weiter nach vorn und schließlich nach links (oder bezüglich Fig. 2 nach rechts, weiter nach oben und nach links) über den Querschlitz 34 in den Vorwärtsschlitz 28 bewegt werden. In diesem Fall bewegt sich der Magnetträger 68 in die Öffnung 82 des Sektorteils 80, der Magnet 70 betätigt den Halleffekt-Vorwärtsschalter 120 und den Halleffekt-"Nicht-Neutral"-Schalter 122, und die Rastfeder 72 wirkt mit dem Rastteil 94 zusammen, um den Hebel 60 lösbar in dem Vorwärtsschlitz 28 zu halten. Wird der Hebel 60 dann nach hinten bewegt, so bewegt sich das Sektorteil 80 mit dem Schaft 66 nach hinten, und der Magnet 102 betätigt den Halleffekt-"Runterschaltimpuls"-Schalter 134 und deaktiviert den Schalter 132. Wenn der Hebel 60 nach vorn bewegt wird, bewegt sich das Sektorteil 80 mit dem Schaft 66 ebenfalls nach vorn, und der Magnet 102 betätigt den Halleffekt-"Hochschaltimpuls"-Schalter 130 und deaktiviert den Schalter 132. Wird der Hebel 60 losgelassen, so drückt die Feder 160 das Sektorteil 80 und den Hebel 60 bezüglich des Vorwärtsschlitzes 28 in eine mittlere Lage, in der nur der Schalter 132 betätigt wird. Die Betätigung der Schalter 130, 132 und 134 kann ausgenutzt werden, um eine nicht gezeigte mikroprozessor-unterstützte elektronische Steuereinheit zu veranlassen, ein nicht gezeigtes Lastschaltgetriebe im Bereich seiner Vorwärtsgangübersetzungen, die durch die Betätigung der Schalter 120 und 122 freigegeben sind, schrittweise hoch oder runter zu schalten.

Vorzugsweise kann diese Schalthebelanordnung 10 in einer nicht gezeigten Fahrzeugkabine angeordnet und so ausgerichtet sein, daß die lange Dimension des Hauptschlitzes 26 sowie der Unterschlitze 28, 30 und 32 ungefähr parallel zu der Längsrichtung der Fahrzeugausrichtung verläuft.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

Beispielsweise können die Halleffekteinrichtungen durch im Handel erhältliche Springschalter oder durch verfügbare Reluktanzeinrichtungen ersetzt werden. Ferner können potentiometerartige, variable Umformer oder andere konventionelle, verstellbare Signalwandler verwendet werden, um an Stelle der Halleffekteinrichtungen die Lage des Hebels 60 festzustellen.

## Patentansprüche

1. Steuerhebelanordnung zur Erzeugung von Steuersignalen für ein Lastschaltgetriebe mit einem Gehäuse (12), in dem ein Hebel (60) schwenkbar gelagert ist, einer Hebelführung (22) mit einem Schlitz (24), welcher den Hebel (60) verschiebbar aufnimmt und den Hebel (60) zwingt, sich innerhalb eines definierten Pfades zu bewegen, und Signalgeneratoren zur Erzeugung von Signalen, die die Position des Hebels (60) innerhalb des Schlitzes (24) repräsentieren, dadurch gekennzeichnet, daß der Schlitz (24) einen Vorwärtsschlitz (28) und einen Parkschlitz (32) enthält, die in einer Reihe hintereinander angeordnet sind, wobei die einander zugewandten Enden dieser Schlitze (28, 32) zueinander beabstandet sind, daß der Vorwärtsschlitz (28) und der Parkschlitz (32) durch wenigstens einen Verbindungsschlitz (26, 38, 34) miteinander verbunden sind und daß wenigstens ein erster Signalgenerator (132) aktiviert wird, wenn der Hebel (60) sich in dem Vorwärtsschlitz (28) bzw. wenn der Hebel (60) sich in dem Parkschlitz (32) befindet.

2. Steuerhebelanordnung nach Anspruch 1, dadurch gekennzeichnet, daß in einer Reihe zwischen dem Vorwärtsschlitz (28) und dem Parkschlitz (32) ein Rückwärtsschlitz (30) angeordnet ist, der mit dem Verbindungsschlitz (26) in Verbindung steht und daß wenigstens ein Signalgenerator (132) aktiviert wird, wenn der Hebel (60) sich in dem Rückwärtsschlitz (30) befindet.

3. Steuerhebelanordnung nach Anspruch 1 oder 2, dadurch gekennzeichnet, daß ein weiterer Signalgenerator (130) vorgesehen ist, der aktiviert wird, wenn der Hebel (60) ein Ende des Parkschlitzes (32) erreicht, und daß der erste Signalgenerator (132) aktiviert wird, wenn der Hebel (60) zu dem anderen Ende des Parkschlitzes (32) bewegt wird.

4. Steuerhebelanordnung nach einem der Ansprüche 1 bis 3, dadurch gekennzeichnet, daß ein zweiter Signalgenerator (130) und ein dritter Signalgenerator (134) vorgesehen sind und daß der erste Signalgenerator (132) aktiviert wird, wenn sich der Hebel (60) in einer Mittelstellung des Vorwärtsschlitzes (28) bzw. des Rückwärtsschlitzes (30) befindet, daß der zweite Signalgenerator (130) aktiviert wird, wenn der Hebel (60) eine erste Endlage des Vorwärtsschlitzes (28) bzw. des Rückwärtsschlitzes (30) einnimmt, und daß der dritte Signalgenerator (134) aktiviert wird, wenn der Hebel (60) eine zweite Endlage des Vorwärtsschlitzes (28) bzw. des Rückwärtsschlitzes (30) einnimmt.

5. Steuerhebelanordnung nach einem der Ansprüch 1 bis 4, dadurch gekennzeichnet, daß weitere Signalgeneratoren (120, 122, 124, 126, 128) vorgesehen sind, die in Abhängigkeit davon aktiviert werden, ob sich der Hebel (60) in dem Vorwärtsschlitz (28), dem Rückwärtsschlitz (30) bzw. dem Parkschlitz (32) befindet.

## Claims

1. A control lever assembly for generating control signals for a powershift transmission, with a housing (12), in which a lever (60) is pivotally mounted, a lever guide (22) with a slot (24) which receives the lever (60) movably and forces the lever (60) to move within a defined path, and signal generators for generating signals which represent the position of the lever (60) within the slot (24), characterized in that the slot (24) includes a forward slot (28) and a parking slot (32) which are arranged in a row one behind the other, wherein the ends of these slots (28, 32) facing each other are spaced from one another, in that the forward slot (28) and the parking slot (32) are connected together by at least one connecting slot (26, 38, 34) and in that at least one first signal generator (132) is activated when the lever (60) is located in the forward slot (28) or when the lever (60) is located in the parking slot (32).

2. A control lever assembly according to claim 1, characterized in that a reverse slot (30) is arranged in a row between the forward slot (28) and the parking slot (32) and is connected to the connecting slot (26), and in that at least one signal generator (132) is activated when the lever (60) is located in the reverse slot (30).

3. A control lever assembly according to claim 1 or 2, characterized in that a further signal generator (130) is provided and is activated when the lever (60) reaches one end of the parking slot (32), and in that the first signal generator (132) is activated when the lever (60) is moved to the other end of the parking slot (32).

4. A control lever assembly according to any of claims 1 to 3, characterized in that a second signal generator (130) and a third signal generator (134) are provided and that the first signal generator (132) is activated when the lever (60) is located in a middle position of the forward slot (28) or of the reverse slot (30), in that the second signal generator (130) is activated when the lever (60) assumes a first end position of the forward slot (28) or of the reverse slot (30), and in that the third signal generator (134) is activated when the lever (60) assumes a second end position of the forward slot (28) or of the reverse slot (30).

5. A control lever assembly according to any of claims 1 to 4, characterized in that further signal generators (120, 122, 124, 126, 128) are provided and are activated in dependence on whether the lever (60) is located in the forward slot (28), the reverse slot (30) or the parking slot (32).

## Revendications

1. Dispositif de levier de commande pour la production de signaux de commande pour une boîte de vitesses commandée en charge, comportant un boîtier (12) dans lequel un levier (60) est monté pivotant, et un guide de levier (22) comportant une fente (21) qui loge le levier (60) de telle sorte qu'il est déplaçable, et contraint le levier (60) à se déplacer sur un trajet défini, et des générateurs de signaux servant à produire des signaux qui représentent la position du levier (60) à l'intérieur de la fente (24), caractérisé en ce que la fente (24) comprend une fente de marche avant (28) et une fente de parcage (32), qui sont disposées en série l'une derrière l'autre, les extrémités, qui sont tournées l'une vers l'autre, de ces fentes (28, 32) étant à une certaine distance réciproque, que la fente de marche avant (28) et la fente de parcage (32) sont reliées entre elles par au moins une fente de liaison (26, 38, 34) et qu'au moins un premier générateur de signaux (132) est activé lorsque le levier (60) est situé dans la fente de marche avant (28) ou lorsque le levier (60) est situé dans la fente de parcage (32).

2. Dispositif de levier de commande selon la revendication 1, caractérisé en ce que dans une rangée entre la fente de marche avant (28) et la fente de parcage (32) est disposée une fente de marche arrière (30), qui est reliée à la fente de liaison (26), et qu'au moins un générateur de signaux (132) est activé lorsque le levier (60) est situé dans la fente de marche arrière (30).

3. Dispositif de levier de commande selon la revendication 1 ou 2, caractérisé en ce qu'il est prévu un autre générateur de signaux (130), qui est activé lorsque le levier (60) atteint une extrémité de la fente de parcage (32), et que le premier générateur de signaux (132) est activé lorsque le levier (60) est déplacé jusqu'à l'autre extrémité de la fente de parcage (32).

4. Dispositif de levier de commande selon l'une des revendications 1 à 3, caractérisé en ce qu'il est prévu un second générateur de signaux (130) et un troisième générateur de signaux (134) et que le premier générateur de signaux (132) est activé lorsque le levier (60) est situé dans une position médiane dans la forme de marche avant (28) ou dans la fente de marche arrière (30), que le second générateur de signaux (132) est activé lorsque le levier (60) occupe une première position d'extrémité de la fente de marche avant (28) ou de la fente de marche arrière (30), et que le troisième générateur de signaux (134) est activé lorsque le levier (60) occupe une seconde position d'extrémité de la fente de marche avant (28) ou de la fente de marche arrière (30).

5. Dispositif de levier de commande selon l'une des revendications 1 à 4, caractérisé en ce que d'autres générateurs de signaux (120, 122, 124, 126) sont prévus, ces générateurs de signaux étant activés en fonction du fait que le levier (60) est situé dans la fente de marche avant (28), dans la fente de marche arrière (30) ou dans la fente de parcage (32).
